# FASCICULE DE BREVET EUROPEEN

(11) **EP 2 935 830 B1**
(45) Date de publication et mention de la délivrance du brevet: **08.02.2017**
(21) Numéro de dépôt: 13818336.3
(22) Date de dépôt: 18.12.2013
(51) Int. Cl.: F02C 3/30, B64C 27/00

(54) **DISPOSITIF ET PROCÉDÉ D'AUGMENTATION TEMPORAIRE DE PUISSANCE**
VORRICHTUNG UND VERFAHREN ZUR ZEITWEILIGEN LEISTUNGSSTEIGERUNG
DEVICE AND METHOD FOR TEMPORARILY INCREASING POWER

(30) Priorité: 20.12.2012 FR 1262433
(43) Date de publication de la demande: 28.10.2015
(73) Titulaire: Safran Helicopter Engines, 64510 Bordes (FR)
(72) Inventeur: MOINE, Bertrand, F-64290 Gan (FR); HUMBERT, Sophie, F-64000 Pau (FR); LABORDE, Patrice, F-64140 Billere (FR); MINEL, Laurent, F-64000 Pau (FR); PRINCIVALLE, Rémy, F-34070 Montpellier (FR)
(74) Mandataire: Calvo de Nó, Rodrigo
(86) Numéro de dépôt international: PCT/FR2013/053152
(87) Numéro de publication internationale: WO 2014/096694

(56) Documents cités:
- GB-A- 2 079 707
- US-A- 3 234 740
- US-A- 3 434 281
- US-A- 3 518 023

## Description

### Arrière-plan de l'invention

La présente invention concerne le domaine des turbomachines et en particulier un dispositif d'augmentation temporaire de puissance d'au moins une première turbomachine.

On entend par « turbomachine », dans le présent contexte, toute machine permettant la conversion de l'énergie thermique d'un fluide de travail en énergie mécanique par détente dudit fluide de travail dans une turbine. Plus particulièrement, ce fluide de travail peut être un gaz de combustion résultant de la réaction chimique d'un combustible avec de l'air dans une chambre de combustion. Ainsi, les turbomachines, telles que comprises dans le présent contexte, comprennent les turboréacteurs à flux simple ou double, les turbopropulseurs, les turbomoteurs ou les turbines à gaz, entre autres. Dans la description qui suit, les termes "amont" et "aval" sont définis par rapport au sens de circulation normal du fluide de travail dans la turbomachine.

Dans certaines circonstances, il peut être souhaitable d'augmenter temporairement la puissance d'une turbomachine. Par exemple, dans un groupe moteur comprenant une pluralité de turbomachines, la défaillance d'une d'entre elles peut nécessiter une augmentation temporaire de la puissance des autres afin de compenser la puissance perdue par la turbomachine défaillante pendant une période de sécurité.

Une des solutions connues de la personne du métier pour obtenir cette augmentation temporaire de puissance est l'injection d'un liquide réfrigérant, qui peut être, entre autres, de l'eau ou un mélange d'eau et d'un antigel, comme par exemple le méthanol, l'éthanol ou le glycol, dans l'admission d'air en amont de la chambre de combustion. D'une part cette injection permet de refroidir cet air en amont de la chambre de combustion, augmentant ainsi sa densité et donc le débit massique d'oxygène admis dans la chambre de combustion. D'autre part, la vaporisation de ce liquide réfrigérant dans la chambre de combustion permet d'augmenter très sensiblement la pression et/ou le débit volumique en aval de la chambre de combustion, et donc le travail mécanique récupéré dans la turbine.

Toutefois, à bord de véhicules, et en particulier d'aéronefs, l'utilisation d'un tel liquide réfrigérant est limitée par la masse de ce liquide réfrigérant pouvant être emportée par le véhicule. Dans la demande de brevet britannique GB 2 046 681 A, il a été proposé d'alimenter l'aéronef en liquide réfrigérant à partir d'un réservoir stationnaire. Toutefois, cette solution n'est évidemment pratique que si l'aéronef est également stationnaire ou presque stationnaire.

US3518023 décrit un dispositif d'augmentation temporaire de puissance d'une turbomachine comprenant un réservoir de liquide réfrigérant, un circuit d'injection connecté audit réservoir et au moins une tuyère d'injection installée en amont d'un étage de compresseur de la turbomachine

Le souhait de pourvoir une puissance supplémentaire pendant une période aussi prolongée que possible est donc en conflit direct avec celui de minimiser la masse supplémentaire de liquide réfrigérant.

En outre, quand l'objet de cette augmentation temporaire de puissance est celui de compenser la défaillance d'une autre turbomachine, il est aussi souhaitable que cette augmentation se déclenche de manière automatique, et ceci aussi rapidement que possible.

### Objet et résumé de l'invention

La présente invention vise à remédier à ces inconvénients. Plus spécifiquement la présente description vise à proposer un dispositif d'augmentation temporaire de puissance d'au moins une première turbomachine, comprenant un réservoir de liquide réfrigérant et un premier circuit d'injection connecté audit réservoir et débouchant sur au moins une tuyère d'injection apte à être installée en amont dudit au moins un étage de compresseur de la première turbomachine, et qui permette de déclencher automatiquement l'injection de liquide réfrigérant en cas de défaillance d'une deuxième turbomachine.

Dans au moins un mode de réalisation d'un tel dispositif, ces buts peuvent être atteints grâce au fait que le premier circuit d'injection comporte au moins une première vanne de passage configurée pour s'ouvrir quand une surpression en amont de ladite première vanne de passage, par rapport à une pression en aval d'au moins un étage de compresseur d'une deuxième turbomachine, excède un seuil prédéterminé, pour permettre l'écoulement du liquide réfrigérant vers ladite tuyère d'injection du premier circuit d'injection, et en ce que le dispositif d'augmentation temporaire de puissance comprend aussi au moins un circuit de pressurisation apte à être relié au moins à un étage de compresseur de la première turbomachine pour pressuriser ledit réservoir, et comportant un clapet anti-retour pour éviter une dépressurisation du réservoir.

Grâce à ces dispositions, une fois que ce dispositif est activé, une défaillance de la deuxième turbomachine, provoquant une chute de la pression fournie par son compresseur, fait passer la surpression en amont de la vanne de passage par rapport à cette pression fournie par le compresseur au-delà du seuil prédéterminé pour l'ouverture de la vanne de passage et peut ainsi déclencher l'ouverture de la vanne de passage et l'écoulement du liquide réfrigérant vers la tuyère d'injection. Comme la pression en amont de la vanne de passage est assurée par la pressurisation du réservoir par le compresseur de la deuxième turbomachine, l'ouverture de cette première vanne de passage sera déterminée par la différence entre la pression fournie par au moins la première turbomachine, et celle fournie par la deuxième turbomachine. Si les deux turbomachines fonctionnent au même régime, ce qui sera typiquement la situation normale, ces deux pressions pourront être sensiblement égales, la surpression ne dépassera pas le seuil prédéterminé, et la première vanne de passage restera fermée. Par contre, si le régime de la deuxième turbomachine diminue par rapport à celui de la première turbomachine suite à une défaillance, la surpression fournie par la première turbomachine par rapport à la deuxième pourra forcer l'ouverture de la première vanne de passage, et permettre l'écoulement du liquide réfrigérant vers la tuyère d'injection.

Avec la vanne de passage en position ouverte, la pressurisation du réservoir assure l'impulsion de l'écoulement du liquide réfrigérant à travers le premier circuit d'injection. Ainsi, le débit de liquide réfrigérant injecté à travers le premier circuit d'injection sera régulé de manière passive par la surpression du réservoir par rapport à la pression atmosphérique, compensant naturellement au moins en partie la performance réduite de la première turbomachine en altitude en y injectant un débit de liquide réfrigérant plus élevé.

En particulier, pour continuer à assurer la pressurisation du réservoir tant en cas de défaillance de la deuxième turbomachine qu'en cas de défaillance de la première turbomachine, le dispositif d'augmentation temporaire de puissance peut comporter aussi un deuxième circuit de pressurisation destiné à être relié à l'étage de compresseur de la deuxième turbomachine. En outre, le réservoir peut présenter au moins une électrovanne de dépressurisation et/ou une soupape de sécurité pour, respectivement, rétablir la pression atmosphérique dans le réservoir quand les turbomachines sont à l'arrêt, et éviter une pressurisation excessive du réservoir quand l'une ou l'autre des turbomachines est en surrégime, et ceci afin de limiter les contraintes mécaniques dues à cette pressurisation.

Tout comme il est souhaitable d'être en mesure de compenser une défaillance de la deuxième turbomachine en augmentant temporairement la puissance fournie par la première turbomachine, il est également souhaitable d'être en mesure de compenser une défaillance de la première turbomachine en augmentant temporairement et de la même manière la puissance fournie par la deuxième turbomachine. Pour cela, le dispositif d'augmentation temporaire de puissance peut aussi comprendre un deuxième circuit d'injection, connecté audit réservoir, débouchant sur au moins une tuyère d'injection, et comportant au moins une vanne de passage configurée pour s'ouvrir quand une surpression excède un seuil prédéterminé par rapport à une pression en aval d'au moins un étage de compresseur de la première turbomachine, pour permettre l'écoulement du liquide réfrigérant vers ladite tuyère d'injection du deuxième circuit d'injection. Cette surpression peut être une surpression en aval de l'au moins un étage de compresseur de la deuxième turbomachine et/ou en amont de la vanne de passage du deuxième circuit d'injection, par rapport à la pression en aval d'au moins un étage de compresseur de la première turbomachine.

Même si dans les ensembles de plus de deux turbomachines l'impact de la défaillance d'une d'entre elles est moins important, la présente invention y est également applicable. Ainsi, pour déclencher un tel dispositif d'augmentation temporaire de puissance d'au moins une première turbomachine en cas de défaillance de la deuxième ou d'une troisième turbomachine, le premier circuit d'injection peut comprendre en outre au moins une deuxième vanne de passage, installée en parallèle à la première vanne dudit premier circuit d'injection, et configurée pour s'ouvrir quand une surpression excède un seuil prédéterminé par rapport à une pression en aval d'au moins un étage de compresseur d'une troisième turbomachine, pour permettre l'écoulement du liquide réfrigérant vers ladite tuyère d'injection du premier circuit d'injection. La configuration en parallèle des deux vannes de passage permet donc de déclencher l'écoulement du liquide de refroidissement vers l'au moins une tuyère d'injection tant en cas de défaillance de la deuxième turbomachine qu'en cas de défaillance de la troisième turbomachine. En outre, le dispositif peut comprendre un circuit d'injection par turbomachine, avec des vannes de passage en parallèle correspondant chacune à chacune des autres turbomachines.

Chaque circuit d'injection peut comprendre en outre une vanne supplémentaire en amont de ladite au moins une vanne de passage. Cette vanne supplémentaire permet de commander l'activation ou désactivation du circuit d'injection, pour notamment éviter l'injection de liquide réfrigérant dans des situations dans lesquelles ceci n'est pas jugé nécessaire.

La présente description concerne aussi un groupe moteur comportant au moins une première turbomachine, une deuxième turbomachine, et un tel dispositif d'augmentation temporaire de puissance d'au moins la première turbomachine, dans lequel ladite tuyère d'injection du premier circuit d'injection est installée en amont dudit étage de compresseur de la première turbomachine, et la première vanne de passage du premier circuit d'injection est connectée audit étage de compresseur de la deuxième turbomachine pour le pilotage de cette première vanne de passage.

En outre, la présente description concerne aussi un aéronef, tel que par exemple un aéronef à voilure tournante, comprenant un tel groupe moteur.

La présente description concerne aussi un procédé d'augmentation temporaire de puissance d'une première turbomachine, dans lequel une première vanne de passage d'un premier circuit d'injection relié à un réservoir du fluide d'injection et débouchant sur au moins une tuyère d'injection en amont de l'au moins un étage de compresseur de la première turbomachine s'ouvre quand une surpression en amont de ladite première vanne de passage, par rapport à une pression en aval d'au moins un étage de compresseur de la deuxième turbomachine, excède un seuil prédéterminé, pour permettre l'écoulement d'un débit du liquide réfrigérant à travers le premier circuit d'injection et son injection par ladite tuyère d'injection en amont d'au moins un étage de compresseur de la première turbomachine, ledit réservoir étant pressurisé par au moins un circuit de pressurisation relié au moins à un étage de compresseur de la première turbomachine, et comportant un clapet anti-retour pour éviter une dépressurisation du réservoir.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement un aéronef comprenant un groupe moteur avec un dispositif d'augmentation temporaire de puissance suivant un premier mode de réalisation ;
- la figure 2 illustre schématiquement le groupe moteur de l'aéronef de la figure 1 ;
- la figure 3 illustre schématiquement un groupe moteur avec un dispositif d'augmentation temporaire de puissance suivant un deuxième mode de réalisation ;
- la figure 4 illustre schématiquement un groupe moteur avec un dispositif d'augmentation temporaire de puissance suivant un troisième mode de réalisation ; et
- la figure 5 illustre schématiquement un dispositif d'augmentation temporaire de puissance suivant un quatrième mode de réalisation.

### Description détaillée de l'invention

La première figure illustre un aéronef 1 à voilure tournante, plus spécifiquement un hélicoptère avec un rotor principal 2 et un rotor de queue anti-couple 3 couplés à un groupe moteur 4 pour leur actionnement. Le groupe moteur 4 illustré comprend deux turbomachines, plus spécifiquement un premier turbomoteur 5A et un deuxième turbomoteur 5B dont les arbres de sortie 6 sont tous les deux reliés à une boîte de transmission principale 7 pour actionner le rotor principal 2 et le rotor de queue 3.

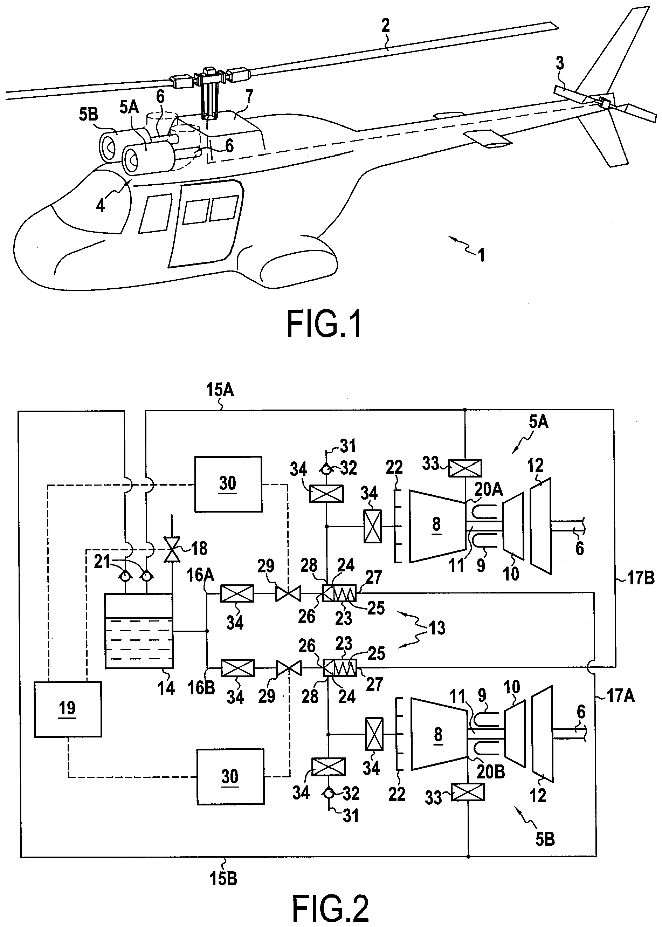

Le groupe moteur 4 est illustré en plus grand détail sur la figure 2. Chaque turbomoteur 5A,5B comprend un compresseur 8, une chambre de combustion 9, une première turbine 10 reliée par un arbre moteur 11 au compresseur 8 et une deuxième turbine 12, ou turbine libre, couplée à l'arbre de sortie 6. Afin de compenser au moins temporairement une chute de puissance due à une défaillance de l'un des turbomoteurs 5A ou 5B, le groupe moteur 4 est équipé d'un dispositif 13 d'augmentation temporaire de la puissance de l'autre des turbomoteurs 5A,5B. Ce dispositif 13 comprend un réservoir 14 de liquide réfrigérant, un premier circuit de pressurisation 15A du réservoir 14, un deuxième circuit de pressurisation 15B du réservoir 14, un premier circuit 16A d'injection du liquide réfrigérant, et un deuxième circuit 16B d'injection du liquide réfrigérant. Le liquide réfrigérant contenu dans le réservoir 14 peut être, par exemple, de l'eau seule ou mélangée à un antigel, tel que du méthanol, de l'éthanol et/ou du glycol. Le réservoir 14 comporte une électrovanne 18 de dépressurisation connectée à une unité centrale de commande 19 de l'aéronef 1. Grâce à cette électrovanne 18, l'unité centrale de commande 19 pourra commander la dépressurisation du réservoir, par exemple en fin de vol.

Le premier circuit de pressurisation 15A relie le réservoir 14 à un point 20A de prélèvement d'air pressurisé en aval d'au moins un étage du compresseur 8 du premier turbomoteur 5A. Il comprend un clapet anti-retour 21, orienté de manière à permettre le débit d'air pressurisé du compresseur 8 vers le réservoir 14, mais empêcher la dépressurisation du réservoir 14 dans l'autre sens. Le deuxième circuit de pressurisation 15B relie le réservoir 14 à un point 20B de prélèvement d'air pressurisé en aval d'au moins un étage du compresseur 8 du deuxième turbomoteur 5B. Il comprend un clapet anti-retour 21, orienté de manière à permettre le débit d'air pressurisé du compresseur 8 vers le réservoir 14, mais empêcher la dépressurisation du réservoir 14 dans l'autre sens. Grâce à cette redondance des circuits de pressurisation 15A,15B, l'un peut continuer à assurer la pressurisation du réservoir 14 même si la turbomachine à laquelle l'autre est relié est défaillante.

Chacun des premier et deuxième circuits d'injection 16A,16B est connecté au réservoir 14 et débouche sur une pluralité de tuyères d'injection 22 installées en amont du compresseur 8 de, respectivement, les premier et deuxième turbomoteurs 5A,5B. Chacun de ces circuits d'injection 16A,16B comporte une vanne de passage 23, qui est une vanne tout-ou-rien à commande fluidique pour permettre ou bloquer le passage du liquide réfrigérant à travers le circuit d'injection 16A,16B, à partir du réservoir 14, vers les tuyères d'injection 22 en amont du compresseur 8 du turbomoteur 5A,5B correspondant. Cette vanne de passage 23 à commande fluidique comprend un piston 24 pouvant coulisser dans une chambre 25 présentant une entrée d'alimentation 26, une entrée de commande 27 et une sortie 28. L'entrée d'alimentation 26 et la sortie 28 sont situées du même côté du piston 24, lequel est précontraint contre l'entrée d'alimentation 26, tandis que l'entrée de commande 27 est située du côté opposé du piston 24. Ainsi, l'ouverture de la vanne de passage 23 est commandée par la surpression de l'entrée d'alimentation 26 par rapport à l'entrée de commande 27. Quand cette surpression dépasse un seuil prédéterminé par la précontrainte axiale du piston 24, la vanne de passage 23 va s'ouvrir pour permettre l'écoulement de liquide réfrigérant à travers la vanne de passage 23.

Dans chacun des deux circuits d'injection 16A,16B, l'entrée d'alimentation 26 de la vanne de passage 23 est connectée au réservoir 14, tandis que la sortie 28 l'est aux tuyères 22. Par contre, dans le premier circuit d'injection 16A, l'entrée de commande 27 de la vanne de passage 23 est connectée à un conduit 17A relié au point 20B de prélèvement d'air pressurisé du deuxième turbomoteur 5B, tandis que dans le deuxième circuit d'injection 16B, l'entrée de commande 27 de la vanne de passage 23 est connectée à un conduit 17B relié au point 20A de prélèvement d'air pressurisé du premier turbomoteur 5A.

Ainsi, dans le premier circuit d'injection 16A, l'ouverture de la vanne de passage 23 est commandée par la surpression du liquide réfrigérant fourni par le réservoir 14 par rapport à l'air comprimé fourni par le compresseur 8 du deuxième turbomoteur 5B, tandis que dans le deuxième circuit d'injection 16B, l'ouverture de la vanne de passage 23 est commandée par la surpression de ce liquide réfrigérant par rapport à l'air comprimé fourni par le compresseur 8 du premier turbomoteur 5A. Tant que le premier turbomoteur 5A et le deuxième turbomoteur 5B, sensiblement identiques, tournent au même régime, ces surpressions seront nulles, et les vannes de passage 23 des deux circuits d'injection 16A,16B resteront fermées. Toutefois, en cas de défaillance du deuxième turbomoteur 5B pendant que le premier turbomoteur 5A continue à tourner à un régime normal, la surpression au réservoir 14, encore pressurisé par l'air comprimé fourni par le compresseur 8 du premier turbomoteur 5A, par rapport à la pression fournie par le compresseur 8 du deuxième turbomoteur 5B à travers le conduit 17A, augmente de manière à éventuellement vaincre la précontrainte de fermeture du piston 24 de la vanne de passage 23 du premier circuit d'injection 16A, affranchissant le passage au liquide réfrigérant, pour permettre l'injection d'un débit de liquide réfrigérant en amont du compresseur 8 du premier turbomoteur 5A. Le liquide réfrigérant injecté ainsi dans la veine d'air du premier turbomoteur 5A pourra ainsi augmenter temporairement sa puissance afin de compenser la défaillance du deuxième turbomoteur 5B. D'autre part, en cas de défaillance du premier turbomoteur 5A pendant que le deuxième turbomoteur 5B continue à tourner à un régime normal, la surpression au réservoir 14, encore pressurisé par l'air comprimé fourni par le compresseur 8 du deuxième turbomoteur 5B, par rapport à la pression fournie par le compresseur 8 du premier turbomoteur 5A à travers le conduit 17B, augmente de manière à éventuellement vaincre la précontrainte de fermeture du piston 24 de la vanne de passage 23 du deuxième circuit d'injection 16B, affranchissant le passage au liquide réfrigérant, pour permettre l'injection d'un débit de liquide réfrigérant en amont du compresseur 8 du deuxième turbomoteur 5B. Le liquide réfrigérant injecté ainsi dans la veine d'air du deuxième turbomoteur 5B pourra ainsi augmenter temporairement sa puissance afin de compenser la défaillance du premier turbomoteur 5A. Dans les deux cas, le débit de liquide réfrigérant injecté est régulé de manière passive par la surpression du réservoir 14 par rapport à la pression atmosphérique. Ainsi, le dispositif 13 d'augmentation temporaire de puissance pourra compenser naturellement au moins en partie la moindre performance des turbomoteurs 5A,5B en altitude en injectant des débits de liquide réfrigérant plus élevés.

Chaque circuit d'injection 16A,16B comprend aussi, directement en amont de sa vanne de passage 23, une électrovanne 29 connectée à une unité de commande individuelle 30 du turbomoteur 5A,5B en aval de ce circuit d'injection 16A,16B afin d'assurer l'activation ou désactivation de chaque circuit 16A,16B. Ainsi, cette unité de commande individuelle 30, qui est aussi reliée à l'unité centrale de commande 19, pourra activer le circuit d'injection 16A,16B en commandant l'ouverture de l'électrovanne 29 en fonction des paramètres de fonctionnement de chaque turbomoteur 5A,5B et/ou d'une commande d'un utilisateur, tel que par exemple un pilote, et le désactiver à nouveau en commandant la fermeture de l'électrovanne 29. Chaque circuit d'injection 16A,16B comprend aussi une entrée de liquide 31, avec un clapet anti-retour 32, permettant d'utiliser les tuyères 26 aussi pour le nettoyage des compresseurs 8. Un filtre 33 dans chaque circuit de pressurisation 15A,15B permet d'éviter la contamination du liquide réfrigérant dans le réservoir 14 par des contaminants provenant des turbomoteurs 5A,5B. Des filtres-crépine 34 dans les circuits d'injection 16A,16B permettent en outre d'éviter que d'autres contaminants puissent être injectés avec le liquide réfrigérant dans les veines d'air des turbomoteurs 5A,5B.

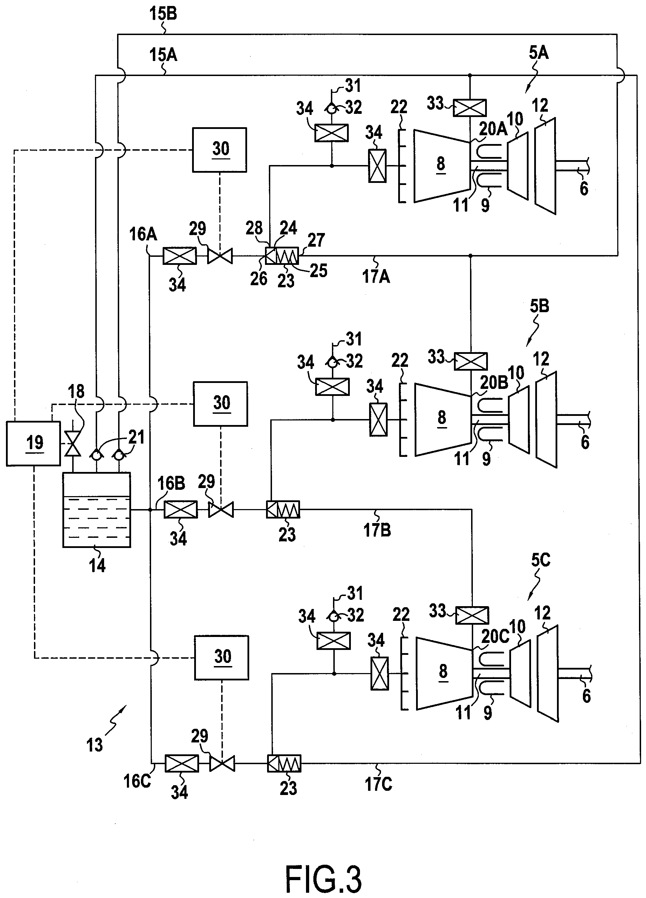

Quoique dans ce premier mode de réalisation le groupe moteur 4 ne comprenne que deux turbomoteurs 5A,5B, les mêmes principes peuvent être appliqués aussi à des groupes moteurs comprenant plus de deux turbomachines. Ainsi, un groupe moteur 4 comprenant trois turbomoteurs 5A,5B,5C avec un dispositif 13 d'augmentation temporaire de leur puissance suivant un deuxième mode de réalisation est illustré sur la Figure 3.

Dans ce deuxième mode de réalisation, le dispositif 14 est configuré de manière à ce que, en cas de défaillance d'un des turbomoteurs 5A,5B,5C, du liquide réfrigérant soit injecté dans les veines d'air en amont d'un des deux autres turbomoteurs de manière à compenser temporairement la perte de puissance du groupe moteur 4 qui serait causée par cette défaillance.

Pour cela, le dispositif 13 comprend, comme dans le premier mode de réalisation, un premier circuit 16A pour l'injection du liquide réfrigérant en amont de la veine d'air du premier turbomoteur 5A et un deuxième circuit 16B pour l'injection du liquide réfrigérant en amont de la veine d'air du deuxième turbomoteur 5B, mais aussi un troisième circuit 16C d'injection du liquide réfrigérant en amont de la veine d'air du troisième turbomoteur 5C.

Chacun des premier, deuxième et troisième circuits d'injection 16A,16B,16C est connecté au réservoir 14 et débouche sur une pluralité de tuyères d'injection 22 installées en amont du compresseur 8 de, respectivement, les premier, deuxième et troisième turbomoteurs 5A,5B,5C. Chacun de ces circuits d'injection 16A,16B,16C comporte une vanne de passage 23 pour permettre ou bloquer le passage d'un débit de liquide réfrigérant circulant à partir du réservoir 14 vers les tuyères d'injection 22 en amont du compresseur 8 du turbomoteur 5A,5B,5C correspondant.

Chacune des vannes de passage 23 de chaque circuit d'injection 16A,16B,16C sont des vannes tout-ou-rien à commande fluidique avec la même structure et le même fonctionnement que les vannes de passage du premier mode de réalisation. Dans ce deuxième mode de réalisation, la vanne de passage 23 du circuit 16A,16B,16C d'injection de liquide réfrigérant en amont de chaque turbomoteur 5A,5B,5C est commandée par la surpression du liquide réfrigérant par rapport à la pression fournie par le compresseur 8 d'un des deux autres turbomoteurs. Ainsi, dans le premier circuit d'injection 16A, le conduit 17A relie l'entrée de commande 27 de la première vanne de passage 23 avec le point 20B de prélèvement d'air pressurisé en aval d'au moins un étage du compresseur 8 du deuxième turbomoteur 5B. Dans le deuxième circuit d'injection 16B, le conduit 17B relie l'entrée de commande 27 de la première vanne de passage 23 avec le point 20C de prélèvement d'air pressurisé en aval d'au moins un étage du compresseur 8 du troisième turbomoteur 5C. Finalement, dans le troisième circuit d'injection 16C, le conduit 17C relie l'entrée de commande 27 de la première vanne de passage 23 avec le point 20A de prélèvement d'air pressurisé en aval d'au moins un étage du compresseur 8 du premier turbomoteur 5A.

Ainsi, en cas de défaillance de l'un quelconque des trois turbomoteurs 5A,5B,5C, la vanne de passage 23 du circuit d'injection de liquide réfrigérant en amont d'un des deux autres turbomoteurs va s'ouvrir pour assurer une injection de fluide réfrigérant dans la veine d'air de cet autre turbomoteur, injection dont le débit sera naturellement régulé par la surpression du réservoir 14 par rapport à la pression atmosphérique. Le reste des composants de ce dispositif 13 d'augmentation temporaire de puissance sont sensiblement identiques à ceux du premier mode de réalisation et reçoivent en conséquence les mêmes chiffres de référence. En particulier, dans ce deuxième mode de réalisation, les mêmes deux circuits de pressurisation 15A,15B du premier mode de réalisation suffisent à assurer une redondance suffisante pour compenser la défaillance d'un seul des turbomoteurs 5A,5B,5C, même si un troisième circuit de pressurisation relié au troisième turbomoteur 5C est bien sûr également envisageable.

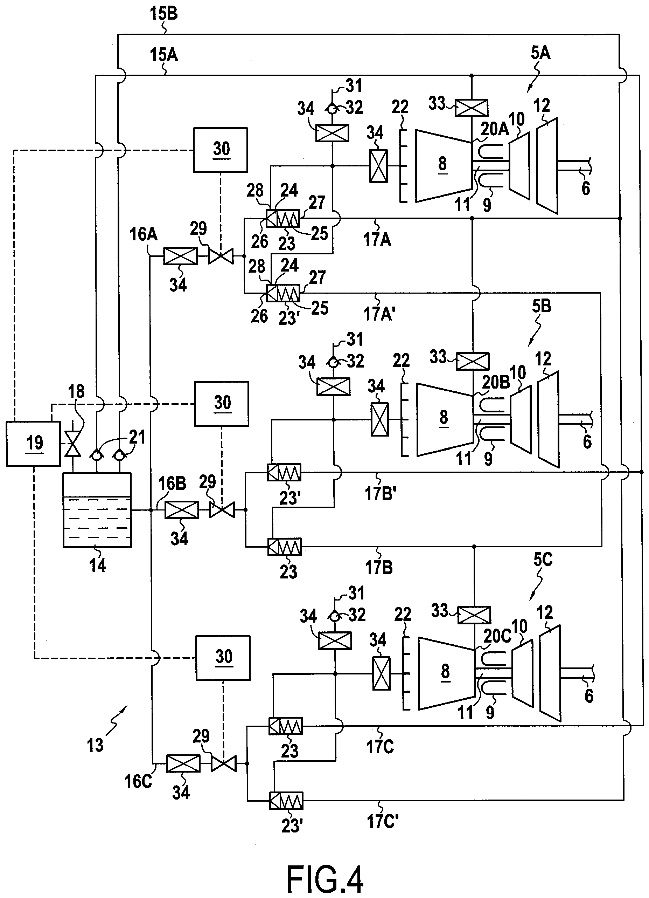

Dans certains cas, dans un groupe moteur comprenant plus de deux turbomachines, en cas de défaillance de l'une des turbomachines, il peut être souhaitable d'augmenter temporairement la puissance de plus d'une seule des autres turbomachines afin de compenser la perte de puissance de la turbomachine défaillante. Un troisième mode de réalisation illustré sur la Figure 4 présente un groupe moteur 4 comprenant trois turbomoteurs 5A,5B,5C avec un dispositif 13 d'augmentation temporaire de leur puissance permettant d'augmenter temporairement la puissance de deux des turbomoteurs en cas de défaillance du troisième.

Dans ce troisième mode de réalisation, le dispositif 14 est configuré de manière à ce que, en cas de défaillance d'un des turbomoteurs 5A,5B,5C, du liquide réfrigérant soit injecté dans les veines d'air en amont des deux autres turbomoteurs de manière à compenser temporairement la perte de puissance du groupe moteur 4 qui serait causée par cette défaillance.

Pour cela, le dispositif 13 comprend, comme dans le deuxième mode de réalisation, un premier circuit 16A pour l'injection du liquide réfrigérant en amont de la veine d'air du premier turbomoteur 5A, un deuxième circuit 16B pour l'injection du liquide réfrigérant en amont de la veine d'air du deuxième turbomoteur 5B, et un troisième circuit 16C d'injection du liquide réfrigérant en amont de la veine d'air du troisième turbomoteur 5C.

Comme dans le deuxième mode de réalisation, chacun des premier, deuxième et troisième circuits d'injection 16A,16B,16C est connecté au réservoir 14 et débouche sur une pluralité de tuyères d'injection 22 installées en amont du compresseur 8 de, respectivement, les premier, deuxième et troisième turbomoteurs 5A,5B,5C. Toutefois, chacun de ces circuits d'injection 16A,16B,16C comporte une première et une deuxième vannes de passage 23,23' installées en parallèle pour permettre ou bloquer le passage d'un débit de liquide réfrigérant circulant à partir du réservoir 14 vers les tuyères d'injection 22 en amont du compresseur 8 du turbomoteur 5A,5B,5C correspondant.

Chacune des première et deuxième vannes de passage 23,23' de chaque circuit d'injection 16A,16B,16C sont des vannes de passage à commande fluidique avec la même structure et le même fonctionnement que les vannes de passage du premier mode de réalisation. Dans ce troisième mode de réalisation, chacune des vannes de passage 23, 23' du circuit 16A,16B,16C d'injection de liquide réfrigérant en amont d'un turbomoteur 5A,5B,5C est commandée par la surpression du liquide réfrigérant par rapport à la pression fournie par le compresseur 8 d'un des deux autres turbomoteurs. Ainsi, dans le premier circuit d'injection 16A, le conduit 17A relie l'entrée de commande 27 de la première vanne de passage 23 avec le point 20B de prélèvement d'air pressurisé en aval d'au moins un étage du compresseur 8 du deuxième turbomoteur 5B, tandis que le conduit 17A' relie l'entrée de commande 27 de la deuxième vanne de passage 23' avec un point 20C de prélèvement d'air pressurisé en aval d'au moins un étage du compresseur 8 du troisième turbomoteur 5C. Dans le deuxième circuit d'injection 16B, le conduit 17B relie l'entrée de commande 27 de la première vanne de passage 23 avec le point 20C de prélèvement d'air pressurisé en aval d'au moins un étage du compresseur 8 du troisième turbomoteur 5C, tandis que le conduit 17B' relie l'entrée de commande 27 de la deuxième vanne de passage 23' avec le point 20A de prélèvement d'air pressurisé en aval d'au moins un étage du compresseur 8 du premier turbomoteur 5A. Finalement, dans le troisième circuit d'injection 16C, le conduit 17C relie l'entrée de commande 27 de la première vanne de passage 23 avec le point 20A de prélèvement d'air pressurisé en aval d'au moins un étage du compresseur 8 du premier turbomoteur 5A, tandis que le conduit 17C' relie l'entrée de commande 27 de la deuxième vanne de passage 23' avec le point 20B de prélèvement d'air pressurisé en aval d'au moins un étage du compresseur 8 du deuxième turbomoteur 5B.

Ainsi, en cas de défaillance de l'un quelconque des trois turbomoteurs 5A,5B,5C, la première ou la deuxième vanne de passage 23,23' des circuits d'injection de liquide réfrigérant en amont des deux autres turbomoteurs va s'ouvrir pour assurer une injection de fluide réfrigérant dans les veines d'air de ces deux autres circuits, injection dont le débit sera naturellement régulé par la surpression du réservoir 14 par rapport à la pression atmosphérique. Le reste des composants de ce dispositif 13 d'augmentation temporaire de puissance sont sensiblement identiques à ceux du deuxième mode de réalisation et reçoivent en conséquence les mêmes chiffres de référence. En particulier, dans ce troisième mode de réalisation, comme dans le deuxième mode de réalisation, les deux circuits de pressurisation 15A,15B du suffisent à assurer une redondance pouvant compenser la défaillance d'un seul des turbomoteurs 5A,5B,5C, même si un troisième circuit de pressurisation relié au troisième turbomoteur 5C est bien sûr également envisageable.

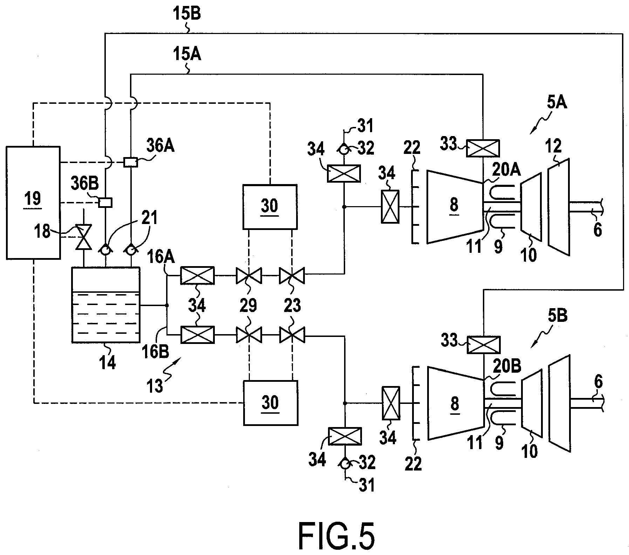

Finalement, même si dans les trois modes de réalisation précédents les vannes de passage sont des vannes à commande fluidique, des moyens de commande alternatifs sont également envisageables. Ainsi, dans un quatrième mode de réalisation illustré sur la figure 5, les deux vannes de passage 23 sont des vannes à commande électrique connectées aux unités de commande individuelle 30 des turbomoteurs correspondants 5A,5B. Des capteurs de pression 36A,36B disposés dans les circuits de pressurisation 15A,15B et connectés à l'unité centrale de commande 19 permettent de capter et comparer les pressions d'air fournies par les compresseurs 8 des deux turbomoteurs 5A,5B, afin d'ouvrir chaque vanne de passage 23 en fonction de la différence entre ces deux pressions, de manière analogue aux commandes fluidiques du premier mode de réalisation. Le reste des composants de ce dispositif 13 d'augmentation temporaire de puissance sont sensiblement identiques à ceux du premier mode de réalisation et reçoivent en conséquence les mêmes chiffres de référence.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Dispositif (13) d'augmentation temporaire de puissance d'au moins une première turbomachine (5A), ce dispositif comprenant :
un réservoir (14) de liquide réfrigérant ; et
un premier circuit d'injection (16A), connecté audit réservoir (14) et débouchant sur au moins une tuyère d'injection (22) apte à être installée en amont d'au moins un étage de compresseur (8) de la première turbomachine (5A) ; et
**caractérisé en ce que** ce premier circuit d'injection (16A) comporte au moins une première vanne de passage (23) configurée pour s'ouvrir quand une surpression en amont de ladite première vanne de passage (23), par rapport à une pression en aval d'au moins un étage de compresseur (8) d'une deuxième turbomachine (5B), excède un seuil prédéterminé, de manière à permettre l'écoulement du liquide réfrigérant vers ladite tuyère d'injection (22) du premier circuit d'injection (16A), et **en ce qu'**il comprend en outre au moins un circuit de pressurisation (15A) apte à être relié au moins à un étage de compresseur (8) de la première turbomachine (5A) pour pressuriser ledit réservoir (14), et comportant un clapet anti-retour (21) pour éviter une dépressurisation du réservoir (14).

2. Dispositif (13) suivant la revendication 1, comprenant en outre un deuxième circuit d'injection (16B), connecté audit réservoir (14), débouchant sur au moins une tuyère d'injection (22), et comportant au moins une vanne de passage (23) configurée pour s'ouvrir quand une surpression excède un seuil prédéterminé par rapport à une pression en aval d'au moins un étage de compresseur, de manière à permettre l'écoulement du liquide réfrigérant vers ladite tuyère d'injection (22) du deuxième circuit d'injection (16B).

3. Dispositif (13) suivant l'une quelconque des revendications 1 ou 2, dans lequel au moins ledit premier circuit d'injection (16A) comprend en outre au moins une deuxième vanne de passage (23'), installée en parallèle à la première vanne de passage (23) dudit premier circuit d'injection (16A), et configurée pour s'ouvrir quand une surpression excède un seuil prédéterminé par rapport à une pression en aval d'un étage de compresseur (8) d'une troisième turbomachine (5C), de manière à permettre l'écoulement du liquide de refroidissement vers ladite tuyère d'injection (22) du premier circuit d'injection (16A).

4. Dispositif (13) suivant l'une quelconque des revendications 1 à 3, dans lequel chaque circuit d'injection (16A,16B) comprend en outre une vanne (29) supplémentaire en amont de l'au moins une vanne de passage (23,23').

5. Groupe moteur (4) comportant au moins une première turbomachine (5A), une deuxième turbomachine (5B), et un dispositif (13) suivant l'une quelconque des revendications précédentes, dans lequel ladite tuyère d'injection (22) du premier circuit d'injection (16A) est installée en amont dudit au moins un étage de compresseur (8) de la première turbomachine (5A), et la première vanne de passage (23) du premier circuit d'injection (16A) est connectée audit compresseur (8) de la deuxième turbomachine (5B) pour la commande de cette première vanne de passage (23).

6. Aéronef (1) comprenant un groupe moteur (4) suivant la revendication 5.

7. Procédé d'augmentation temporaire de puissance d'une première turbomachine (5A), dans lequel une première vanne de passage (23) d'un premier circuit d'injection (16A) relié à un réservoir (14) de liquide réfrigérant et débouchant sur au moins une tuyère d'injection (22) en amont d'au moins un étage de compresseur (8) de la première turbomachine (5A) s'ouvre quand une surpression en amont de ladite première vanne de passage (23), par rapport à une pression en aval d'au moins un étage de compresseur (8) d'une deuxième turbomachine (5B), excède un seuil prédéterminé, pour permettre l'écoulement d'un débit du liquide réfrigérant à travers le premier circuit d'injection (16A) et son injection par ladite tuyère d'injection (22) en amont d'au moins un étage de compresseur (8) de la première turbomachine (5A), ledit réservoir (14) étant pressurisé par au moins un circuit de pressurisation (15A) relié au moins à un étage de compresseur (8) de la première turbomachine (5A), et comportant un clapet anti-retour (21) pour éviter une dépressurisation du réservoir (14).

## Patentansprüche

1. Vorrichtung (13) zur temporären Leistungssteigerung mindestens einer ersten Turbomaschine (5A), wobei die Vorrichtung umfasst:
- einen ersten Kühlflüssigkeitsbehälter (14), und
- einen ersten Einspritzkreis (16A), die an den Behälter (14) angeschlossen ist und an mindestens einem Einspritzrohr (22) mündet, das geeignet ist, stromaufwärts zu mindestens einer Kompressorstufe (8) der ersten Turbomaschine (5A) installiert zu werden, und
**dadurch gekennzeichnet, dass** der erste Einspritzkreis (16A) mindestens ein erstes Durchgangsventil (23) umfasst, das dazu vorgesehen ist, sich zu öffnen, wenn ein Überdruck stromaufwärts zum ersten Durchgangsventil (23) in Bezug zu einem Druck stromabwärts zu mindestens einer Kompressorstufe (8) einer zweiten Turbomaschine (5B) eine vorbestimmte Schwelle überschreitet, um das Abfließen der Kühlflüssigkeit zu dem Einspritzrohr (22) des ersten Einspritzkreises (16A) zu ermöglichen, und dass sie ferner mindestens einen Druckbeaufschlagungskreis (15A) umfasst, der geeignet ist, mindestens mit einer Kompressorstufe (8) der ersten Turbomaschine (5A) verbunden zu sein, um den Behälter (14) mit Druck zu beaufschlagen, und umfassend eine Rückschlagklappe (21), um einen Druckabfalls des Behälters (14) zu vermeiden.

2. Vorrichtung (13) nach Anspruch 1, ferner umfassend einen zweiten Einspritzkreis (16B), der an den Behälter (14) angeschlossen ist und an mindestens einem Einspritzrohr (22) mündet, und umfassend mindestens ein Durchgangsventil (23), das dazu vorgesehen ist, sich zu öffnen, wenn ein Überdruck eine vorbestimmte Schwelle in Bezug zu einem Druck stromaufwärts zu mindestens einer Kompressorstufe überschreitet, um das Abfließen der Kühlflüssigkeit zu dem Einspritzrohr (22) des zweiten Einspritzkreises (16B) zu ermöglichen.

3. Vorrichtung (13) nach einem der Ansprüche 1 oder 2, bei der mindestens der erste Einspritzkreis (16A) ferner mindestens ein zweites Durchgangsventil (23') umfasst, das parallel mit dem ersten Durchgangsventil (23) des ersten Einspritzkreises (16A) installiert und dazu vorgesehen ist, sich zu öffnen, wenn ein Überdruck eine vorbestimmte Schwelle in Bezug zu einem Druck stromabwärts zu einer Kompressorstufe (8) einer dritten Turbomaschine (5C) überschreitet, um das Abfließen der Kühlflüssigkeit zu dem Einspritzrohr (22) des ersten Einspritzkreises (16A) zu ermöglichen.

4. Vorrichtung (13) nach einem der Ansprüche 1 bis 3, bei der jeder Einspritzkreis (16A, 16B) ferner ein zusätzliches Ventil (29) stromaufwärts zu dem mindestens einen Durchgangsventil (23, 23') umfasst.

5. Motorgruppe (4), umfassend mindestens eine erste Turbomaschine (5A), eine zweite Turbomaschine (5B) und eine Vorrichtung (13) nach einem der vorhergehenden Ansprüche, bei der das Einspritzrohr (22) des ersten Einspritzkreises (16A) stromaufwärts zu der mindestens einen Kompressorstufe (8) der ersten Turbomaschine (5A) installiert ist, und das erste Durchgangsventil (23) des ersten Einspritzkreises (16A) an den Kompressor (8) der zweiten Turbomaschine (5B) zur Steuerung dieses ersten Durchgangsventils (23) angeschlossen ist.

6. Flugzeug (1), umfassend eine Motorgruppe (4) nach Anspruch 5.

7. Verfahren zur temporären Leistungssteigerung einer ersten Turbomaschine (5A), bei dem sich ein erstes Durchgangsventil (23) eines ersten Einspritzkreises (16A), der an einen Kühlmittelbehälter (14) angeschlossen ist und an mindestens einem Einspritzrohr (22) stromaufwärts zu mindestens einer Kompressorstufe (8) der ersten Turbomaschine (5A) mündet, öffnet, wenn ein Überdruck stromaufwärts zu dem ersten Durchgangsventil (23) in Bezug zu einem Druck stromabwärts zu mindestens einer Kompressorstufe (8) einer zweiten Turbomaschine (5B) eine vorbestimmte Schwelle überschreitet, um das Abfließen einer Kühlflüssigkeitsmenge durch den ersten Einspritzkreis (16A) und ihr Einspritzen durch das Einspritzrohr (22) stromaufwärts zu mindestens einer Kompressorstufe (8) der ersten Turbomaschine (5A) zu ermöglichen, wobei der Behälter (14) durch mindestens einen Druckbeaufschlagungskreis (15A), der mindestens einer Kompressorstufe (8) der ersten Turbomaschine (5A) verbunden ist, mit Druck beaufschlagt wird und eine Rückschlagklappe (21) umfasst, um einen Druckabfall des Behälters (14) zu vermeiden.

## Claims

1. A device (13) for temporarily increasing the power of at least a first turbine engine (5A), the device comprising:
• a tank (14) of coolant liquid; and
• a first injection circuit (16A) connected to said tank (14) and leading to at least one injection nozzle (22) suitable for being installed upstream from at least one compressor stage (8) of the first turbine engine (5A);
the device being **characterized in that** the first injection circuit (16A) includes at least a first flow valve (23) configured to open when pressure upstream from said first flow valve (23) exceeds downstream pressure from at least one compressor stage (8) of a second turbine engine (5B) by an amount greater than a predetermined threshold, so as to allow the coolant liquid to flow towards said injection nozzle (22) of the first injection circuit (16A), and **in that** it further includes at least one pressurization circuit (15A) suitable for being connected to at least one compressor stage (8) of the first turbine engine (5A) for pressurizing said tank (14) and including a check valve (21) to prevent depressurizing the tank (14).

2. A device (13) according to claim 1, further including a second injection circuit (16B) connected to said tank (14), leading to at least one injection nozzle (22), and including at least one flow valve (23) configured to open when pressure exceeds a predetermined threshold relative to a downstream pressure from at least one compressor stage, in such a manner as to enable the coolant liquid to flow towards said injection nozzle (22) of the second injection circuit (16B).

3. A device (13) according to claim 1 or claim 2, wherein at least said first injection circuit (16A) further includes at least one second flow valve (23') connected in parallel with the first flow valve (23) of said first injection circuit (16A) and configured to open when pressure exceeds a predetermined threshold relative to a downstream pressure from a compressor stage (8) of a third turbine engine (5C) so as to enable the coolant liquid to flow towards said injection nozzle (22) of the first injection circuit (16A).

4. A device (13) according to any one of claims 1 to 3, wherein each injection circuit (16A, 16B) further includes an additional valve (29) upstream from the at least one flow valve (23, 23').

5. A power plant (4) including at least a first turbine engine (5A), a second turbine engine (5B), and a device (13) according to any preceding claim, wherein said injection nozzle (22) of the first injection circuit (16A) is installed upstream from said at least one compressor stage (8) of the first turbine engine (5A), and the first flow valve (23) of the first injection circuit (16A) is connected to said compressor (8) of the second turbine engine (5B) in order to control said first flow valve (23).

6. An aircraft (1) including a power plant (4) according to claim 5.

7. A method of temporarily increasing power of a first turbine engine (5A), wherein a first flow valve (23) of a first injection circuit (16A) connected to a tank (14) of coolant liquid and leading to at least one injection nozzle (22) upstream from at least one compressor stage (8) of the first turbine engine (5A) opens when pressure upstream from said first flow valve (23) is greater than downstream pressure from at least one compressor stage (8) of a second turbine engine (5B) by an amount that exceeds a predetermined threshold so as to enable coolant liquid to flow through the first injection circuit (16A) and be injected by said injection nozzle (22) upstream from at least one compressor stage (8) of the first turbine engine (5A), said tank (14) being pressurized by at least one pressurization circuit (15A) connected to at least one compressor stage (8) of the first turbine engine (5A) and including a check valve (21) in order to prevent depressurizing the tank (14).
